# EUROPÄISCHE PATENTSCHRIFT

(11) **EP 0 553 700 B1**
(45) Veröffentlichungstag und Bekanntmachung des Hinweises auf die Patenterteilung: **04.06.1997**
(21) Anmeldenummer: 93100775.1
(22) Anmeldetag: 20.01.1993
(51) Int. Cl.: H04N 5/225, H04N 5/232, H04N 5/74

(54) **Videokamera, wahlweise als Projektor betreibbar**
Video camera, optionally operable as projector
Caméra vidéo pouvant être utilisée comme projecteur

(30) Priorität: 29.01.1992 DE 4202424; 03.08.1992 DE 4225604; 30.09.1992 DE 4232866
(43) Veröffentlichungstag der Anmeldung: 04.08.1993
(73) Patentinhaber: Deutsche Thomson-Brandt GmbH, 78003 Villingen-Schwenningen (DE)
(72) Erfinder: Seegert, Bernhard, W-7730 VS-Villingen (DE); Lei, Fang, W-7731 Unterkirnach (DE); Probach, Dieter, W-7730 VS-Villingen (DE); Spruck, Manfred, W-7730 VS-Villingen (DE)

(56) Entgegenhaltungen:
- PATENT ABSTRACTS OF JAPAN vol. 15, no. 444 (E-1132)12. November 1991& JP-A-31 87 681
- PATENT ABSTRACTS OF JAPAN vol. 15, no. 246 (E-1081)24. Juni 1991 & JP-A-30 78 374
- PATENT ABSTRACTS OF JAPAN vol. 16, no. 11 (E-1153)13. Januar 1992 & JP-A-32 31 572
- PATENT ABSTRACTS OF JAPAN vol. 12, no. 65 (E-586)27. Februar 1988 & JP-A-62 207 073
- PATENT ABSTRACTS OF JAPAN vol. 14, no. 341 (P-1081)24. Juli 1990 & JP-A-21 18 988
- PATENT ABSTRACTS OF JAPAN vol. 15, no. 229 (E-1076)11. Juni 1991 & JP-A-30 65 879
- PATENT ABSTRACTS OF JAPAN vol. 14, no. 302 (E-946)28. Juni 1990 & JP-A-20 96 481

## Beschreibung

Die Erfindung geht aus von einer Videokamera gemäß dem Oberbegriff des Anspruchs 1.

Videokameras mit einer Möglichkeit zur Aufzeichnung, sogenannte Camcorder, finden in zunehmendem Maße Anwendung auf dem Gebiete des Hobbyfilmens. Die Aufnahme auf Magnetband hat den Vorteil, daß keine Entwicklungsarbeiten notwendig sind, die Qualität der Aufnahme unmittelbar nach der Aufnahme kontrolliert werden kann, die Wiedergabe unmittelbar nach der Aufnahme möglich ist und nicht gewünschte Aufnahmen wieder gelöscht werden können. Andererseits stellen derartige Camcorder ein relativ teures und je nach verwendeter Kassette großes Gerät dar.

Aus JP-A-3187681 ist bekannt, eine Kamera gleichzeitig als Projektor zu betreiben. Aus JP-A-2118988 ist bekannt, eine Kamera auf eine Einheit mit Lichtquelle und Spannungsversorgung anzuordnen, die dann die Kamera mit entsprechenden Energien versorgt.

Der Erfindung liegt die Aufgabe zugrunde, den Gebrauchswert und die Anwendungsmöglichkeiten einer Videokamera, insbesondere eines Camcorders, zu erhöhen.

Diese Aufgabe wird durch die im Anspruch 1 angegebene Erfindung gelöst. Vorteilhafte Weiterbildungen der Erfindung sind in den Unteransprüchen angegeben.

Die erfindungsgemäße Kamera kann also wahlweise als Projektor ausgenutzt werden, indem an den LCD-Bildschirm des Suchers ein Videosignal angelegt und an der Stelle des Sucherokulars eine übliche Projektions-Lichtquelle eingefügt wird. Das Videosignal erzeugt dann über das Objektiv der Kamera ein Bild auf einer Projektionswand, wobei wesentliche Teile der Kamera, die sonst für Kamerabetrieb dienen, für Projektionsbetrieb ausgenutzt werden. Das Videosignal kann von einer äußeren Signalquelle, z.B. einem Fernsehempfänger oder einem externen Videorecorder kommen. Bei einem Camcorder kommt das Videosignal vorzugsweise von der im Camcorder vorhandenen Aufzeichnungseinheit. Das Videosignal kann auch von einem elektronischen Diaabtaster oder Filmabtaster geliefert werden. Vorzugsweise werden bei Projektorbetrieb der zwischen dem Objektiv und dem Sucherokular vorhandene CCD-Sensor zur Erzeugung des Videosignals bei Kamerabetrieb, auch Imager genannt, und die Hintergrundbeleuchtung für den LCD-Bildschirm des Suchers aus dem Strahlengang weggeschwenkt, weil diese Teile bei Projektorbetrieb nicht benötigt werden und im Strahlengang stören würden. Durch die Erfindung werden also der Gebrauchswert und die Anwendungsmöglichkeiten einer üblichen Videokamera, insbesondere eines Camcorders beträchtlich erhöht. Der Mehraufwand ist dabei gering, weil praktisch alle für den Projektorbetrieb notwendigen Mittel in der Kamera ohnehin bereits enthalten sind. Das ist besonders vorteilhaft bei mobilem Betrieb wie z.B. Reisen. Vorzugsweise ist die für Projektorbetrieb notwendige Lichtquelle bei Projektorbetrieb von außen auf das Sucherokular der Kamera aufsetzbar ausgebildet. Das ist vorteilhaft, zumal die Lichtquelle relativ hoher Leistung von z.B. 50 Watt meistens ohnehin vom Netz oder einem getrennten Akku gespeist werden muß. Das Objektiv, der LCD-Bildschirm und die Projektions-Lichtquelle sind vorzugsweise in einer Achse angeordnet. Die für Kamerabetrieb vorgesehenen Einstell- und Bedienmittel für Zoom, Focus, Blende und dgl. sind vorzugsweise auch bei Projektorbetrieb wirksam. Die Projektions-Lichtquelle kann zusätzlich als Kameraleuchte bei Aufnahmebetrieb zum Beleuchten des aufzunehmenden Objektes ausgenutzt werden.

Es ist auch möglich, der Kamera eine relativ kleine, auf das Kameragehäuse aufsetzbare Projektionsleinwand, z.B. mit einer Fläche von etwa DIN A4 zuzuordnen. Dann besteht die Möglichkeit, mit relativ wenig Aufwand und geringem Gerätevolum eine vorhandene Aufnahme mit hoher Qualität auch mit mehreren Personen gleichzeitig zu betrachten. Durch die Doppelausnutzung des LCD-Bildschirms kann es vorkommen, daß das projizierte Bild spiegelverkehrt erscheint. Dieses kann jedoch leicht durch Verwendung eines Speichers oder durch geändertes Auslesen des Display aufgehoben werden.

Die Erfindung wird im folgenden anhand der Zeichnung erläutert. Darin zeigen
- Fig. 1: den Aufbau einer bekannten Videokamera,
- Fig. 2: die Abwandlung der Kamera gemäß Fig. 1 für Projektorbetrieb,
- Fig. 3, 4: eine Abwandlung der Optik zur Formatanpassung bei den beiden verschiedenen Betriebsarten,
- Fig. 5: ein Ausführungsbeispiel für eine Weiterbildung der Erfindung,
- Fig. 6: ein Ausführungsbeispiel für eine Weiterbildung der Erfindung,
- Fig. 7: Ansicht der Kamera von hinten in Projektorbetrieb,
- Fig. 8: Ansicht der Kamera von hinten in Kamerabetrieb und
- Fig. 9-20: weitere Ausführungsbeispiele für Weiterbildungen der Erfindung.

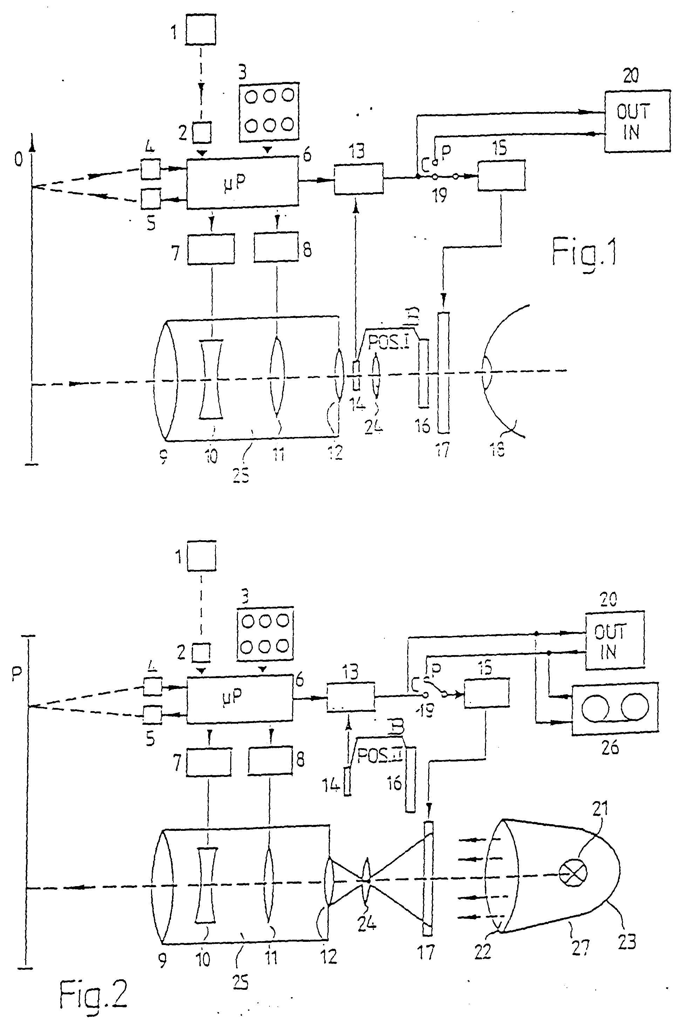

Fig. 1 zeigt eine übliche Videokamera zur Aufnahme eines Objektes O. Die Kamera enthält einen als Fernbedienungsgeber wirkenden Infrarotsender 1, den als Fernbedienungsempfänger wirkenden Infrarotempfänger 2, die Bedienungstastatur 3, den Infrafrotempfänger 4 und den Infrarotsender 5 für eine automatische Fokussierung, den Microprozessor 6, die Stelleinrichtung 7 für Zoom, die Stelleinrichtung 8 für Fokussierung, das Objektiv 25 mit der Eintrittslinse 9, der Zoomlinse 10, der Fokuslinse 11 und der Austrittslinse 12. Ferner sind dargestellt der Signalprozessor 13, der als optoelektronischer Wandler dienende CCD-Sensor 14, auch Imager genannt, die LCD-Treiberstufe 15, die Hintergrund-Lichtquelle 16 für den Bestandteil des Suchers bildenden LCD-Bildschirm 17, der Umschalter 19, die Eingangs/Ausgangs-Buchsen 20 und die zur Formatanpassung dienende Linse 24. Das vom Sensor 14 erzeugte Videosignal gelangt auf die Ausgangsbuchse 20 und außerdem zur Realisierung einer Sucherfunktion über den Treiber 15 auf den LCD-Bildschirm 17, wo der vom Objektiv 25 erfaßte Bildausschnitt mit dem Auge 18 betrachtet werden kann. Bei Aufnahmebetrieb befindet sich der Schalter 19 in der Stellung C, so daß das Videosignal vom Prozessor 13 sowohl auf die Ausgangsbuchse 20 als auch auf den LCD-Bildschirm 17 gelangt. In der Stellung P des Schalters 19 kann ein äußeres Videosignal auf dem LCD-Bildschirm 17 dargestellt und mit dem Auge 18 oder mit zwei Augen über einen biokularen Sucher betrachtet werden.

In Fig. 2 ist die Kamera gemäß Fig. 1 auf Projektorbetrieb umgeschaltet. Durch die symbolisch angedeutete Brücke B, die durch manuell betätigte oder elektromotorisch angetriebene Mittel gebildet ist, sind der Sensor 14 und die Lichtquelle 16 aus dem Strahlengang des Objektiv 25 weggeschwenkt. Der Eingang des LCD-Bildschirms 17 ist über den Umschalter 19 in der Stellung P an eine Eingangsbuchse 20 für ein Videosignal oder an den Ausgang einer in der Kamera enthaltenden Recordereinheit oder eines externen Recorders 26 angeschlossen. An der Stelle des Sucher-Okulars, also etwa an der Stelle des Auges 18 in Fig. 1, ist die Projektions-Lichtquelle 27 eingefügt, die eine Projektionsbirne 21, einen Kondensator 22 und einen Reflektor 23 aufweist. Die Lichtquelle 27 hat z.B. eine Leistung von 50 Watt und wird vom Netz oder einem externen Akku gespeist. Das Videosignal von der Eingangsbuchse 20 oder der Recordereinheit 26 steuert die Lichtdurchlässigkeit des LCD-Bildschirms 17. Das Lichtbündel von der Lichtquelle 27 wird dadurch entsprechend dem Videosignal moduliert. Das Lichtbündel gelangt über die zur Formatanpassung dienende Linse 24 und das Objektiv 25 auf die Projektionswand P. Auf der Projektionswand P wird somit ein dem Videosignal entsprechendes Bild erzeugt.

Die Umschaltung des Strahlengangs zwischen der Position I gemäß Fig. 1 und der Position II gemäß Fig. 2 kann auch durch umklappbare Spiegel, Prismen oder dgl. erfolgen, die je nach ihrer Stellung entweder den Strahlengang vom Objektiv 25 direkt auf den Wandler 14 gemäß Fig. 1 oder den Strahlengang von der Lichtquelle 27 über den LCD-Bildschirm 17 zum Objektiv 25 freigeben. Durch derartige umklappbare Spiegel oder Prismen kann die Bautiefe des Gerätes gegebenenfalls verringert werden. Die Linse 24 dient allgemein zur Formatanpassung, um z.B. ein Format von 0,7" auf 0,33" umzusetzen.

Gemäß einer Weiterbildung der Erfindung wird statt Verwendung einer zusätzlichen Linse oder Linsengruppe eine im Zoomobjektiv ohnehin vorhandene Linse oder Linsengruppe beim Umschalten von Kamerabetrieb auf Projektorbetrieb in ihrer axialen Lage geändert. Dadurch wird der Backfokus geändert, so daß die Fokuslinse einen anderen Verschiebebereich bekommt. Im neuen Verschiebebereich wird sie nach einer Steuerkurve verschoben, damit die zweite Bildebene am gewünschten Ort steht und im gesamten Brennweitenbereich unveränderbar bleibt. Es kann sein, daß die Steuerkurve für das Zoomteil (Vario-Teil) im gegebenen Brennweitenbereich entsprechend angepaßt werden muß.

Eine Linse oder Linsengruppe im Zoom- Objektiv hat für Kamerabetrieb und Projektorbetrieb jeweils eine andere feste Position. Das ermöglicht, unterschiedliche Anforderungen an Kamerabetrieb und Projektorbetrieb bei der Konstruktion von Zoom-Objektiven zu berücksichtigen. Z.B. müssen bei Projektorbetrieb das Zoom-Objektiv und das Beleuchtungssystem aneinander angepaßt werden, um mehr und gleichmäßige Helligkeit auf der Leinwand zu erzielen.

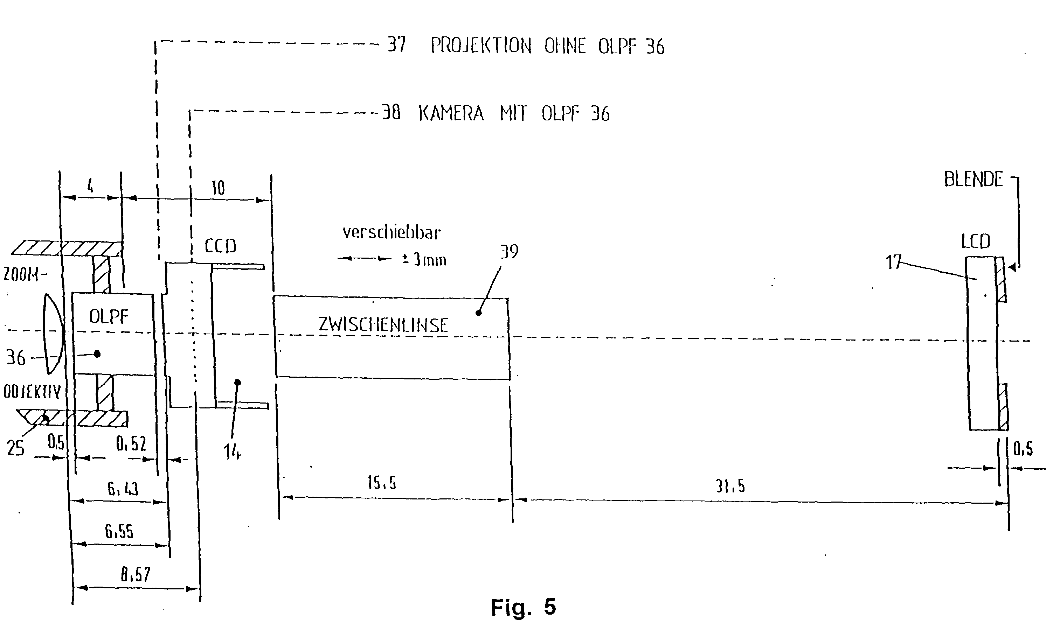

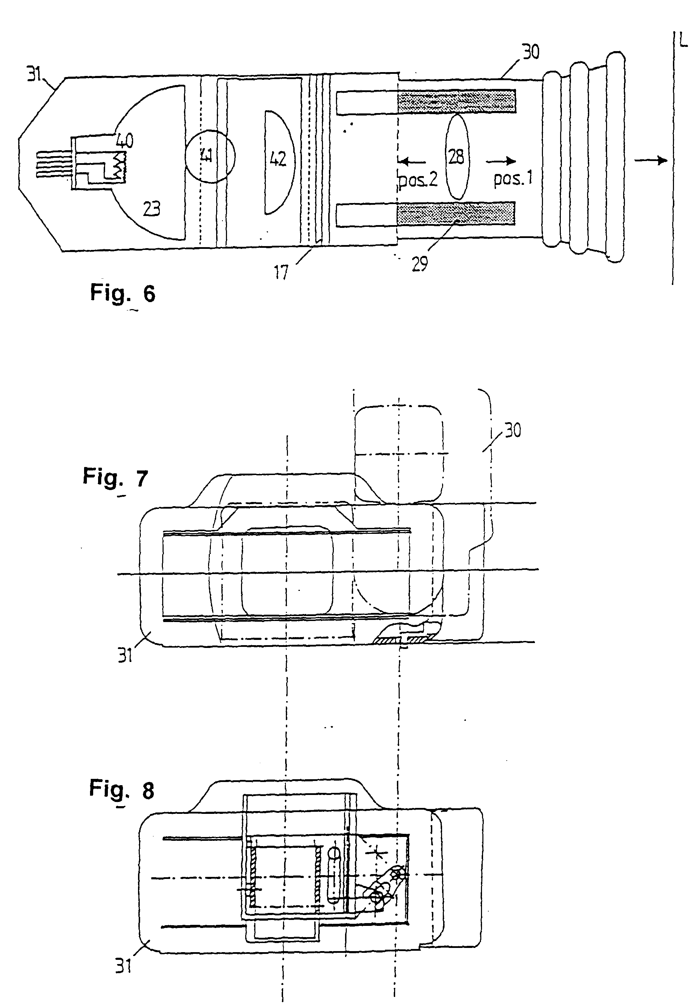

Eine derartige Lösung mit Verschiebung einer Linse oder Linsengruppe zur Formatanpassung an den CCD-Sensor 14 und den LCD-Bildschirm 17 ist in den Fig. 5 und 6 dargestellt.

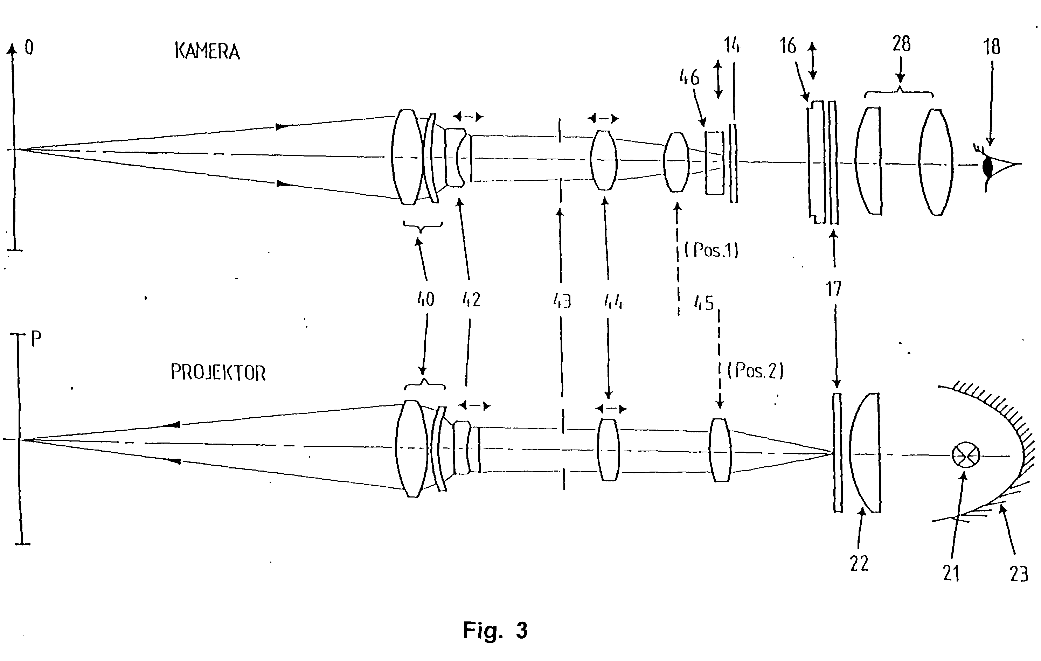

Fig. 3 zeigt das Zoom-Objektiv mit zwei Bildebenen für Kamerabetrieb und Projektorbetrieb. Dargestellt sind das Frontglied 40 des Zoomobjektives, das für die Innenfokusierung eine feste Lage hat, jedoch sonst für die Entfernungseinstellung verschiebbar ist. Ferner sind dargestellt das Zoom-Teil 42 des Objektives, das zur Brennweitenänderung in Axialrichtung verschiebbar ist, die Iris-Blende 43, die zur Fokussierung in Axialrichtung verschiebbare Fokuslinse 44, die als sogenanntes Hinterglied wirkende Linse 45, das sogenannte OLPF (Optical Low Pass Filter), der einer ersten Bildebene entsprechende CCD-Sensor 14, die LCD-Hintergrundbeleuchtung 16, der LCD-Bildschirm 17, das Okular 28 und das Auge 18 für Kamerabetrieb. Für Projektorbetrieb sind zusätzlich dargestellt die Kondensorlinse 22, die Halogenlampe 21 und der Ellipsoidspiegel 23, das Objekt O für Kamerabetrieb und die Leinwand P für Projektorbetrieb. Die Linse oder Linsengruppe 45 ist bei Kamerabetrieb auf eine Axialposition 1 und bei Projektorbetrieb auf eine davon abweichende Axialposition 2 eingestellt.

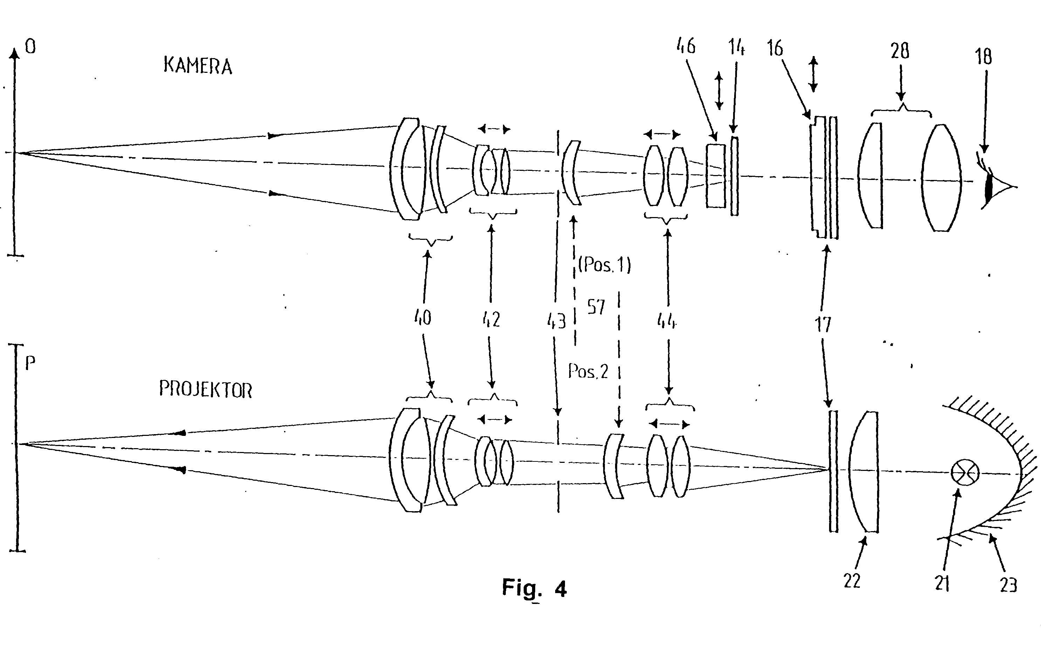

Fig. 4 zeigt eine ähnliche Anordnung wie Fig. 3 für Kamerabetrieb und Projektorbetrieb. In Fig. 4 ist die Relais-Linse 57 für Kamerabetrieb und Projektorbetrieb zur Bildung von zwei Bildebenen in Axialrichtung verschiebbar.

Der Zoom-Teil 42 und die Fokuslinse 44 werden zur Maßstabs- und damit Brennweitenänderung verschoben. Bei jeder Bildebene bleiben das Frontglied 40 und das Hinterglied 45, fest und bei der Umschaltung von Kamerabetrieb auf Projektorbetrieb wird das Hintergliec 45 je nach der Konstruktion von Zoom-Objektiv 42 entweder nach hinten oder nach vorne verschoben, d.h. das Hinterglied 45 hat für die zweite Bildebene eine andere feste Position, damit der zweite Backfokus dem Bildformat des LCD-Bildschirms 17 angepaßt ist. Nach der Lageänderung des Hintergliedes bekommt die Fokuslinse 44 einen neuen Verschiebebereich. Jede Verschiebung wird an die neue Bildebene angepaßt. Wie Fig. 4 zeigt, steht dort die Fokuslinse 44 oder - Linsengruppe ganz hinten. Die Relaislinse 57, bei Bedarf auch eine Linsengruppe, wird hinter der Irisblende 43 angeordnet. Sie ist für jeden Betrieb fest, hat aber im jeweiligen Betrieb verschiedene Positionen. Beim Projektorbetrieb wird der CCD-Sensor 14 zusammen mit einem optischen Tiefpaßfilter aus dem Strahlengang entfernt. Damit steht zusätzlicher Platz für ein Verschieben der Fokuslinse zur Verfügung.

Vorzugsweise wird im Projektorbetrieb das Optical Low Pass Filter (OLPF) zusammen mit dem CCD-Sensor 14 aus dem Lichtbild weggeschwenkt. Dadurch ergibt sich eine höhere Transmission und somit eine höhere Lichtausbeute. Durch diese Maßnahme verschiebt sicht die Backfokusebene, also die Ebene, in der das Bild auf dem CCD-Sensor 14 abgebildet wird. Diese zweite Ebene, also die Backfokusebene ohne OLPF im Projektorbetrieb, befindet sich im allgemeinen wenige Millimeter dichter an der hinteren Objektivlinse als bei Kamerabetrieb.

Eine derartige Weiterbildung ist in Fig. 5 dargestellt. Angedeutet sind die Bildebene 37 für Projektorbetrieb ohne OLPF 36 und die demgegenüber versetzte Bildebene 38 für Kamerabetrieb mit dem OLPF 36. Die dargestellte Zwischenlinse 39 ist für die beiden Betriebsarten Projektorbetrieb und Kamerabetrieb etwa um ±3 mm verschiebbar.

Es ist auch möglich, einen CCD-Sensor 14 und einen LCD-Bildschirm 17 mit demselben Format und denselben geometrischen Abmessungen zu verwenden. Dann kann auf eine Zwischenabbildung verzichtet werden. Der LCD-Bildschirm 17 wird dann unter die oben beschriebene Backfokusebene für Projektorbetrieb eingeschoben. Dadurch, daß der LCD-Bildschirm 17 in Kamerabetrieb mit einer relativ kleinen Leuchtstofflampe und im Projektorbetrieb mit einer Halogenlampe wesentlich höherer Leistung betrieben wird, ergeben sich zwei verschiedene Farbtemperaturen für weiß. Dieses läßt sich kompensieren, indem die RGB-Verstärkungsfaktoren für die Ansteuerung des LCD-Bildschirms 17 angeglichen werden.

Bei einer Weiterbildung der Erfindung muß das Okular, welches beim Projektorbetrieb dient, nicht von der Kamera abgenommen werden. Stattdessen wird die Hintergrundlichtquelle des LCD-Bilschirms so ausgebildet, daß es sich um eine Doppelfadenbirne handelt, die zum einen für den Kamerabetrieb und zum anderen für den Projektorbetrieb benutzt wird. Das hat den Vorteil, daß keine zweite weitere externe Lichtquelle benötigt wird, da diese nunmehr in ein und demselben Gerät vorhanden ist.

Die Seitenumkehr, die zwischen Kamerabetrieb und Projektorbetrieb erfolgt, wird vermieden, indem bei Kamerabetrieb das Okular nach vorne geschwenkt wird und die Ausleserichtung vertauscht wird. Statt die Ausleserichtung zu vertauschen, erscheint eine richtige Seitenansicht auch, wenn die Projektierung auf einer Leinwand von hinten geschieht. Vorteilhaft hierbei wäre, daß der Betrachter sich nicht mehr zwischen Projektor und projektiertem Bild befinden würde.

Da das Okular seitlich an der Kamera schwenkbar angesetzt ist, wird die Drehachse rohrförmig realisiert, wodurch mittels eines Ventilators (im Kamerateil) hierdurch die warme Luft bei dem Projektorbetrieb abgesaugt werden kann.

Gemäß einer Weiterbildung der Erfindung wird das LCD je nach Mode (Kamera/Projektor) von unterschiedlichen Seiten beschienen. Da LCD's eine Vorzugsrichtung besitzen, wo sie mit voller Helligkeit zu betreiben sind, wird diese Vorzugsrichtung für den Projektormode benutzt und die Richtung mit der dunkleren Hintergrundbeleuchtung wird dem Kamerabetrieb zugeordnet.

Die zuvor beschriebene Kamera kann insbesondere auf ein sogenanntes powerpack gesetzt werden. In diesem powerpack sind integriert zum einem die stärkere Lichtquelle für die Projektierung, der Ventilator für die Kühlung, das Netzteil für die Kamera, die Ladeeinheit für einen Akku, eine Halterung für einen aufsetzbaren Akku und das Tonteil für z.B. Verstärker/Lautsprecher.

Die Einstellwerte für Kamerabetrieb (Helligkeit, Kontrast, Farbsignal) lassen sich per software (menügesteuert) verändern.

Fig. 6 stellt eine derartige Weiterbildung der Erfindung dar, wobei das Gehäuse 30 des Okulars 28 mit dem Gehäuse 31 der Kamera verbunden ist und an diesem der Anschluß für die Befestigung der Kühlung 41 vorhanden ist. Im Gehäuse 31 befinden sich die Doppelfadenglühlampe 40 und der Reflektor 23 sowie der Kondensor 42. In dem Gehäuse 30 des Okulars befindet sich der LCD-Bildschirm 17 sowie die Elektronik 29. Bei Projektorbetrieb wird das Okular 28 in Position 1 verschoben, so daß das Bild durch das Anstrahlen des LCD-Bildschirmmittels des hellen Glühfadens der Doppelfadenglühlampe 41 auf die Leinwand L projiziert wird. Im Kamerabetrieb übernimmt der Glühfaden mit der geringeren Leistung die Aufgabe der Hintergrundlichtquelle, so daß der LCD-Bildschirm den aufgenommenen Gegenstand darstellt und das Auge durch das in Position 2 verschobene Okular dieses Bild wahrnehmen kann.

Fig. 7 zeigt die Kamera von hinten betrachtet. Es sind zu erkennen das Kameragehäuse 31 und das winkelig hochgestellte Okulargehäuse 30. In dieser Stellung wird der Projektorbetrieb durchgeführt.

Fig. 8 zeigt die Kamera wiederum von hinten, jedoch ist hier das Okulargehäuse 30 in der Ebene des Kameragehäuses 31. In dieser Stellung wird der Kamerabetrieb vorgenommen.

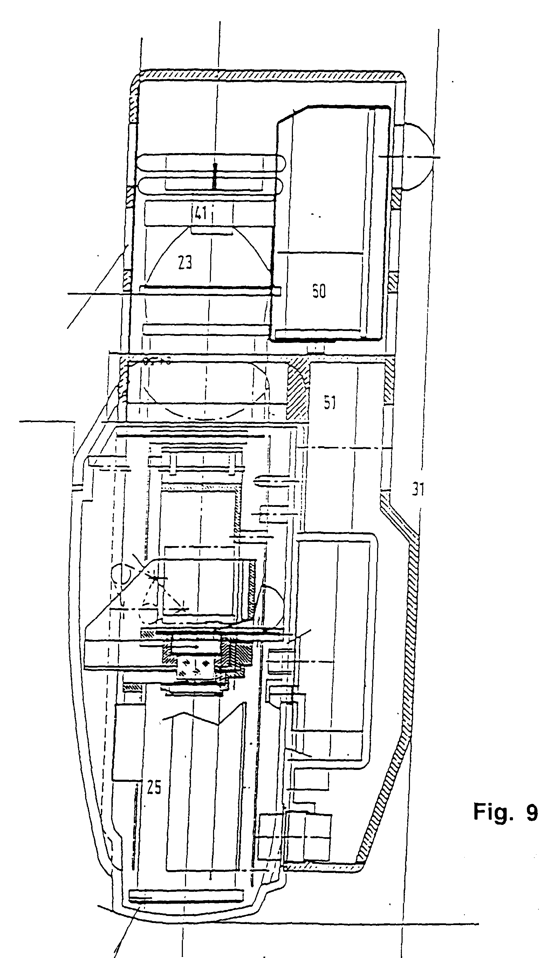

Fig. 9 zeigt ein Ausführungsbeispiel für eine Weiterbildung der Erfindung, wobei es sich bei dieser Darstellung um den Kamerabetrieb handelt. Die beschriebenen Kamerateile sind wiederzukennen. Das Objektiv 25 und der Reflektor 23 sind in einem Gehäuse (powerpack) integriert, in dem sich nun desweiteren das Netzteil für die Kamera, die Ladeeinheit 50 für einen Akku und die Halterung für einen aufsetzbaren Akku befinden. Zum anderen enthält das Gehäuse eine stärkere Lichtquelle, z.B. die zuvor beschriebene Doppelglühfadenbirne 40. Zur Belüftung ist desweiteren ein Ventilator 51 eingebaut. Weiterhin ist an dem Gehäuse eine Halterung für den Tonteil z.B. Verstärker und Lautsprecher vorgesehen.

Bei einer Weiterbildung der Erfindung wird das Okular derart in dem Kameragehäuse angeordnet, daß eine von außen aufsetzbare Lichtquelle den Projektorbetrieb ermöglicht. Die Projektion erfolgt durch das Okular des Viewfinders, so daß das Okular als Projektionsobjektiv verwendet wird. Als Kameraobjektiv wird ein Standardobjektiv ohne mechanische Schiebemechanismen für den Projektionsbetrieb verwendet. Als Lichtquelle des Viewfinders für den Kamerabetrieb werden eine oder mehrere Glühlampen verwendet, deren Lichtbündel auf eine dem LCD vorgesetzte Streuscheibe gerichtet sind. Die Glühlampen befinden sich seitlich angeordnet, also nicht im Lichtpfad bei Projektorbetrieb. Im Projektorbetrieb wird die Hintergrundlichtquelle des LCD-Systems einfach ausgeschaltet, so daß diese nicht mehr mechanisch aus dem Lichtweg der Projektorbeleuchtung genommen wird.

Im Projektorbetrieb wird der Kameraprojektor auf das Powerpack aufgesetzt, wobei das gebündelte Licht durch das Projektionsfenster auf die Streuscheibe, durch das LCD über das Okular auf die Leinwand gelangt. Wahlweise wird die Streuscheibe weggeklappt, damit die Helligkeit vergrößert wird. Das Okular ist bei Transport des Kameraprojektors eingeschoben, dadurch ergeben sich kompaktere Abmessungen. Bei Kamera- oder Projektorbetrieb wird das Okular um ca 3 cm herausgeschoben und schaltet gleichzeitig den Projektorbetrieb ein. Das Okular läßt sich im Projektorbetrieb noch weiter herausziehen, um die Fokussierung vornehmen zu können. Im Kamerabetrieb kann durch die Schutzscheibe das Umgebungslicht auf die Streuscheibe gelangen und somit das LCD von hinten beleuchten. Dieses hat den Vorteil, daß bei besonders großer Umgebungshelligkeit das Bild des Viewfinders ebenfalls heller ist. Bei herkömmlichen Viewfindern mit Kathodenstrahlröhren ist dieses oft nicht ausreichend. Im Viewfinder-Betrieb muß sichergestellt werden, daß die helle Projektionslampe nicht eingeschaltet wird. Dieses wird mit Hilfe eines Quecksilberschalters erreicht, der nur dann die Projektionslampe einschaltet, wenn der Viewfinder umgeklappt ist (auf dem Kopf steht). Die richtige Lage muß gewährleistet sein, damit die Bilder seitenrichtig projiziert werden. Statt des Quecksilberschalters sind alle lagenabhängigen Schalter verwendbar.

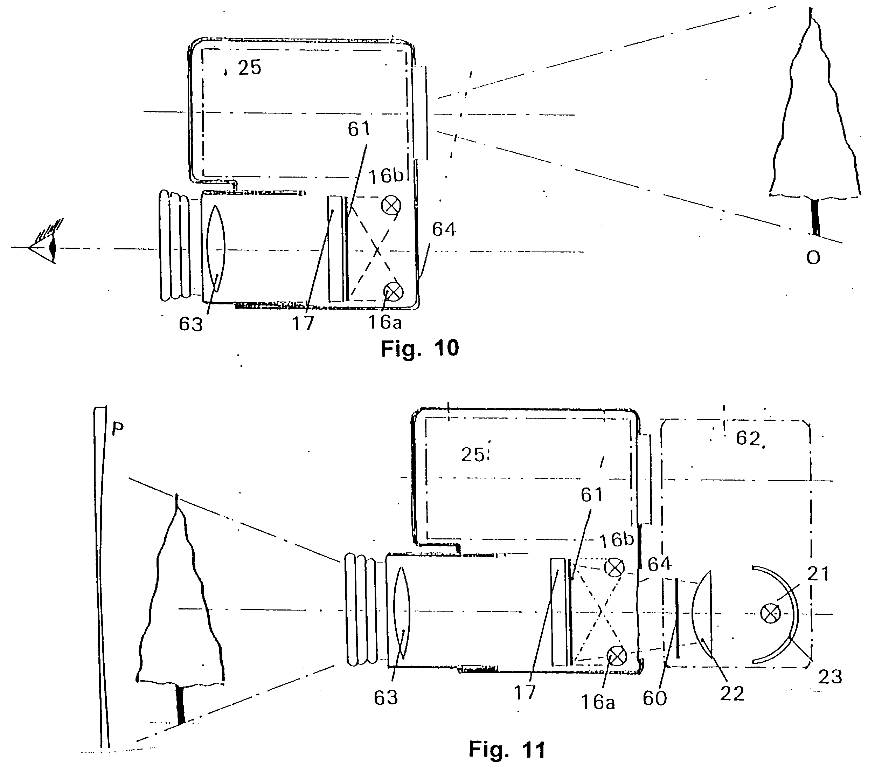

Diese Weiterbildung der Erfindung wird im folgenden anhand der Figuren 10, 11 erläutert.

Fig. 10 stellt den Kamerabetrieb dar. Das Objekt O wird mit dem Objektiv 25 erfaßt und auf dem LCD-Bildschirm 17 dargestellt. Der LCD-Bildschirm 17 wird mit der Hintergrundbeleuchtung 16a, 16b durch die Streuscheibe 61 beleuchtet. Durch die Linse 63 wird das Objekt O auf dem LCD-Bildschirm 17 betrachtet. Durch die Schutzscheibe 64 gelangt das Umgebungslicht auf die Streuscheibe 61, so daß der LCD-Bildschirm 17 von hinten beleuchtet wird.

Fig. 11 stellt den Projektorbetrieb dar. Das Powerpack 62 ist so zu der Kamera ausgerichtet, daß der Lichtstrahl der Halogenlampe 21 über den Ellipsoidspiegel 23 durch die Kondensorlinse 22 und das IR-Filter 60 durch die Schutzscheibe 64 auf die Streuscheibe 61 gelangt und so der LCD-Bildschirm 17 beleuchtet wird. Durch diese helle Beleuchtung wird das Bild durch die Linse 63 auf die Leinwand P projiziert.

Gemäß einer weiteren Weiterbildung der Erfindung wird das vorhandene Zoom-Objektiv, welches sich im praktischen Einsatz gut gewährt hat, unverändert beibehalten. Für die zweite Bildebene (LCD-Ebene) wird ein angepaßtes Linsensystem direkt an das verwendete Zoom-Objektiv angeschlossen und dadurch ein neues Zoom-Objektiv erhalten, das ein anderes Bildformat hat. Die zweite Bildebene bzw. der zweite Backfokus wird durch Einschieben eines weiteren Linsensystems in die CCD-Ebene erhalten. Dieses Linsensystem wird direkt an das konventionelle Zoom-Objektiv angeschlossen und bildet zusammen mit ihm ein neues Zoom-Objektiv, dessen Bildebene mit der LCD-Ebene übereinstimmt. Das Videobild auf dem LCD-Bildschirm wird vom neu zusammengesetzten Zoom-Objektiv auf einer Projektionsleinwand abgebildet. Das herkömmliche Zomm-Objektiv kann unverändert weiter benutzt werden. Die Elektronik zur Ansteuerung des Zoom-Objektivs bleibt gleich. Im Vergleich zur Lösung mit Zwischenabbildung, bei der das Videobild auf dem LCD-Bildschirm von einem Linsensystem in die CCD-Ebene zwischendurch abgebildet ist, hat diese Lösung eine kompaktere Konfiguration, da das zusätzliche Linsensystem direkt an das Zoom-Objektiv angeschlossen ist. Der Energieverlust wird dadurch gesenkt.

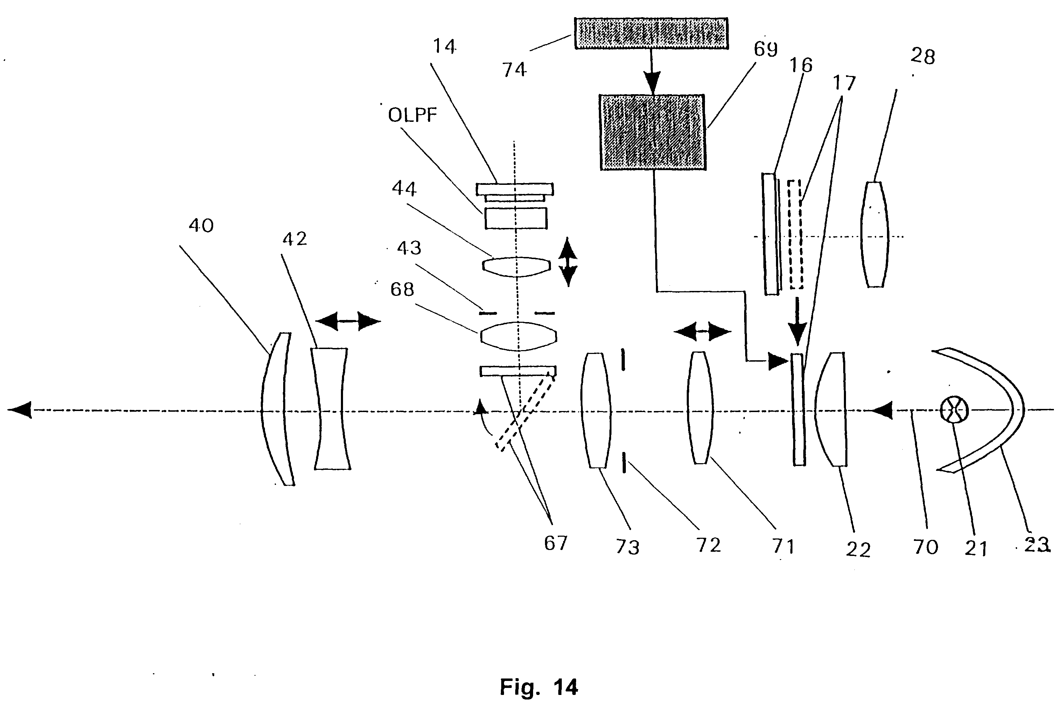

Eine derartige Lösung mit Einschieben eines weiteren Linsensystems in die CCD-Ebene ist in Fig. 14 dargestellt.

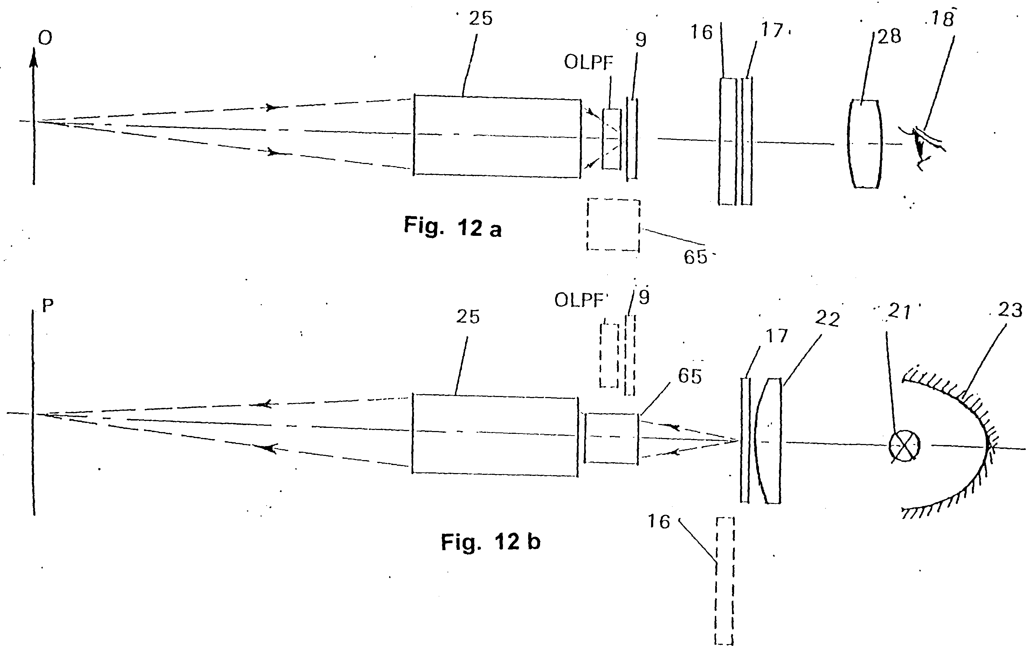

Die Fig. 12a zeigt das Zoom-Objektiv 25 bei normalem Kamerabetrieb. In Fig. 12b tritt ein weiteres Linsensystem 65 an die Stelle, eingeschoben wo vorher das Low Pass Filter OLPF und der CCD-Sensor 9 sich befanden. Dadurch wird die Bildebene nach hinten in die LCD-Ebene 17 verschoben. Beim Verschieben der Hintergrundbeleuchtung 16 und beim Anschluß eines Beleuchtungssystems, das aus einer Kondensorlinse 22 und einer Halogenlampe 21 mit einem eingebauten Ellipsoidspiegel 23 besteht, wird das Videobild auf dem LCD-Bildschirm 17 vom zusammengesetzten Zoom-Objektiv 25 und dem Linsensystem 65 auf eine Leinwand P projiziert.

Gemäß einer anderen Weiterbildung der Erfindung wird eine Umschaltung zwischen zwei Objektiven vorgenommen. Das Verhältnis der Brennweite zur Eintrittspupille des verwendeten Objektives ist durch eine F-Nummer definiert. Die F-Nummer beim Kamerabetrieb wird beim Projektorbetrieb durch das zusätzliche Linsensystem um den Faktor 2,1 vergrößert. Die Brennweite muß um diesen Faktor vergrößert werden , um die Bildformatänderung von 1/3 "(CCD) auf 0,7" (LCD) zu realisieren. Die größere F-Nummer führt zur schwächeren Beleuchtungswerten auf der Projektionsleinwand. Um diese möglichst kleinere F-Nr. beim Projektorbetrieb zu bekommen, muß die Größe der Eintrittspupille bei Umschaltung von Kamerabetrieb auf Projektorbetrieb entsprechend vergrößert werden. Eine Möglichkeit, die Eintrittspupille des gesamten Abbildungssystems zu beeinflussen, wäre, in Fig. 3, 4 eine Relais-Linse oder Relais-Gruppe vor der Irisblende anzuordnen, welche bei Bildformatänderungen in Axialrichtung verschoben wird. Gemäß dieser anderen Weiterbildung der Erfindung wird das zum CCD-Format passende 1/3" Zoom-Objektiv mit einem 0,7" Zoom-Objektiv für LCD-Format kombiniert. Das kombinierte Zoom-Objektiv hat ein gemeinsames Frontglied und Zoom-Teil für die beiden Bildformate, aber die Irisblende, Relais-Linse und Fokuslinse sind für jedes Format verschieden. Sie bilden mit den gemeinsamen Teilen jeweils ein 1/3" Zoom-Objektiv für Kamerabetrieb und ein 0,7" Zoom-Objektiv für Projektorbetrieb. Die Umschaltung zwischen den beiden Zoom-Objektiven erfolgt durch Umklappen eines Spiegels hinter den Zoom-Teil. Für jedes Format wird eine geeignete Irisblende und Relais-Linse ausgebildet. Die F-Nummer wird bei der Konstruktion für die beiden Formate getrennt bestimmt und für ihre unterschiedliche Anforderung an berücksichtigt.

Es gibt bei dieser anderen Lösung zwei Irisblenden, zwei Relais-Linsen und zwei Fokuslinsen für F-Nummern und Bildformatanpassungen. Daher können die F-Nummer und Bildformat im Kamera- und Projektorbetrieb getrennt berücktsichtigt und angepaßt werden. Es bewegt sich hierbei der LCD-Bildschirm, der bei Umschaltung des Strahlenganges verschoben wird. Dieser Vorteil erspart komplizierte mechanische Konstruktionen für die beweglichen Teile und gewährleistet eine präzise Positionierung des CCD-Sensors. Die individuelle Bestimmung der F-Nummer für Projektorbetrieb ermöglicht eine stärkere Projektionsbeleuchtung. Dieses Konzept ist auch bei der Konstruktion eines Foto-Camcorders geeignet.

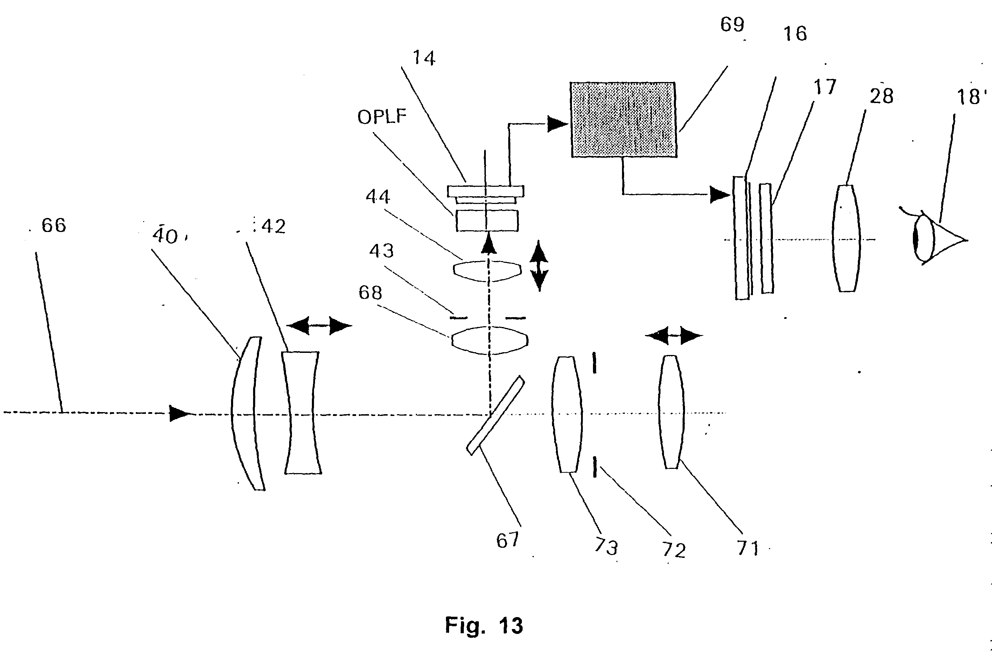

Eine derartige Kombination zweier Zoom-Objektive ist in Fig. 13, 14 dargestellt.

Fig. 13 zeigt das kombinierte Zoom-Objektiv bei normalen Kamerabetrieb. Der Lichtstrahl 66 wird durch das gemeinsame Frontglied 40 zum Zoom-Teil 42 und vom Spiegel 67 umgelenkt. Weiter geht er durch die erste Relais-Linse 68, die erste Irisblende 43, die erste Fokuslinse 44 und das Optical Low Pass Filter OLPF auf den CCD-Sensor 14, wo die erste Bildebene bzw. der erste Backfokus des kombinierten Zoom-Objektivs ist. Das Licht wird vom CCD-Sensor 14 in elektrische Ladung umgewandelt. Das erzeugte Videosignal gelangt über eine entsprechende Elektronik und den Prozessor 69 auf die LCD-Hintergrundlichtquelle 16. Der aufgenommene Bildausschnitt ist mit Hilfe der Hintergrundlichtquelle 16 im LCD-Bildschirm 17 durch ein Okular 28 mit dem Auge 18 zu betrachten.

In Fig. 14 ist das kombinierte Zoom-Objektiv durch Umklappen des Spiegels 67 auf Projektorbetrieb umgeschaltet. Dabei ist der LCD-Bildschirm 17 in die zweite Bildebene des kombinierten Zoom-Objektivs eingeschoben. Direkt hinter dem LCD-Bildschirm 17 ist eine Beleuchtungseinrichtung mit einer Kondensorlinse 22, einer Halogenlampe 21 und Ellipsoidspiegel 23 angebracht. Ein Videosignal aus einer in der Kamera enthaltenden Recordereinheit oder einem externen Recorder 74 ist auf dem LCD-Bildschirm 17 darstellbar. Der Lichtstrahl 70 aus der Halogenlampe 21 wird vom Videosignal moduliert. Er gelangt über die zweite Fokuslinse 71, die zweite Irislinse 72, die zweite Relaislinse 73 und das gemeinsame Zoom-Teil 42 und Frontglied 40 auf eine Projektionswand P.

Bei einer nächsten Weiterbildung der Erfindung wird die unterschiedliche Anforderung an die F-Nummer für die beiden Bildformate mit einer Irislinse erfüllt, die im Kamera- und Porjektorbetrieb unterschiedliedliche Axialpositionen hat.

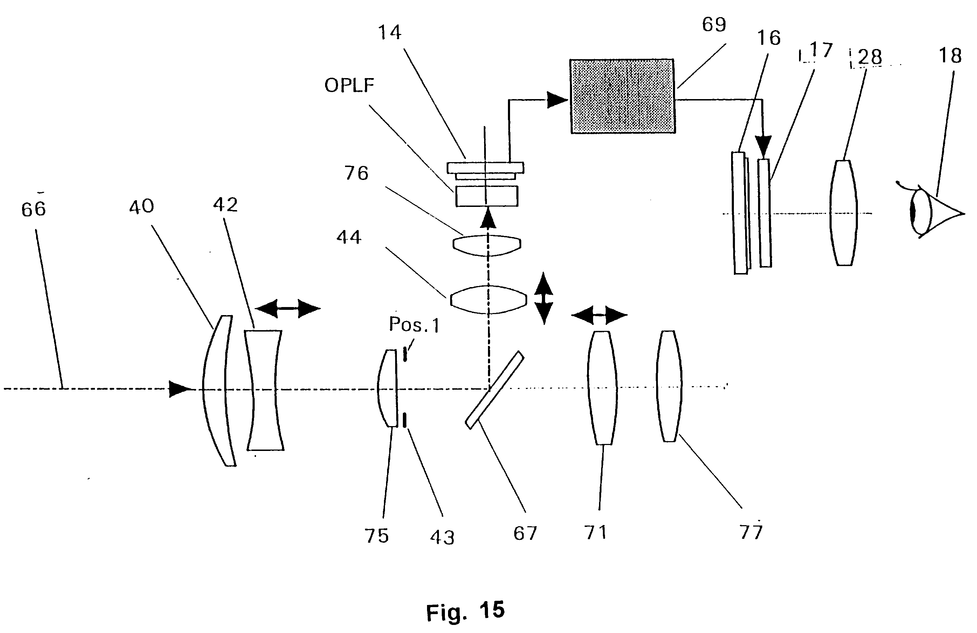

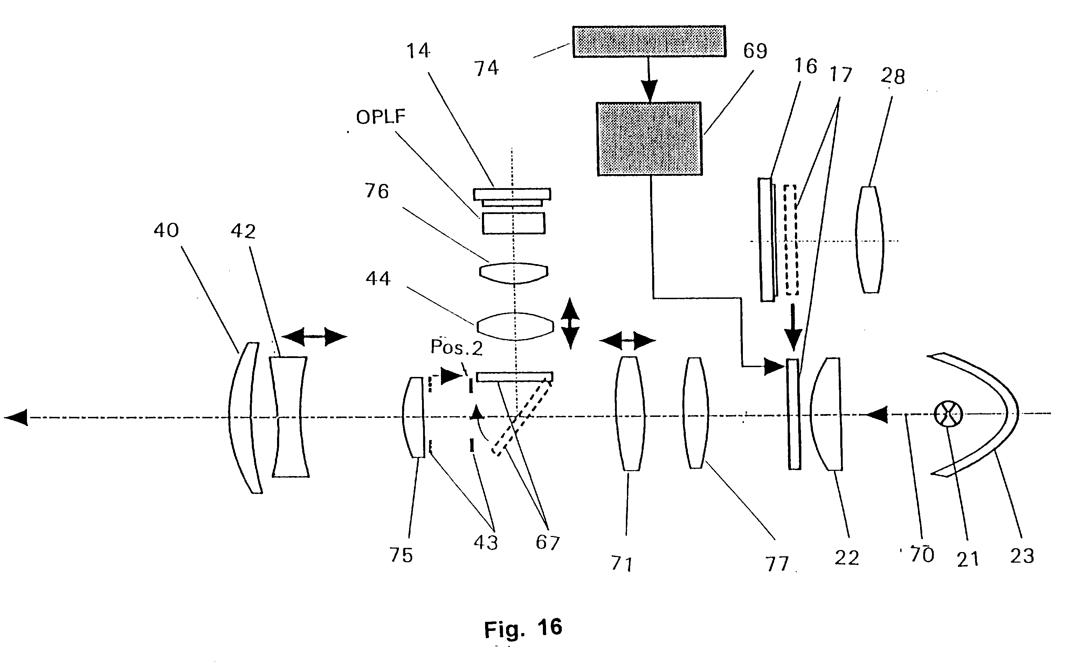

Fig. 15 und 16 zeigen ein derartiges Ausführungsbeispiel mit einer verschiebbaren Irisblende für Kobmination zweier Zoom-Objektive.

In Fig. 15 ist die erste Position der Irisblende 43 bei normalem Kamerabetrieb gezeigt. Vor der Irisblende 43 ist eine Relais-Linse 75 angeordnet, die je nach Konstruktion auch eine Linsengruppe ist. Ein Teil von dieser Relais-Linsengruppe kann hinter der Blende 43 angebracht werden, d.h. die Irisblende 43 befindet sich zwischen zwei Teilen der Relais-Linsengruppe. In diesem Ausführungsbeispiel ist eine als sogenanntes Hinterglied wirkende Linse 76 und 77 jeweils hinter der Fokuslinse 44 und 71 vorgesehen.

Fig. 16 zeigt die zweite Position der Irisblende 43 für Projektorbetrieb. Während des Umschaltens von Kamerabetrieb auf Projektorbetrieb wird durch Umklappen des Spiegels 67 die Irisblende 43 von einer Axialposition 1 auf eine davon abweichende Axialposition 2 verschoben. Je nach Konstruktion oder Anforderung wird dabei die Relais-Linse 75 oder ein Teil der Relais-Linsengruppe mit verschoben. Dadurch hat das kombinierte Zoom-Objektiv ein ganz anderes Verhältnis der Brennweite zur Eintrittspupille, die durch Abbildung der Irisblende 43 von der Relais-Linse 75, den Zoom-Teil 42 und dem Frontglied 40 entsteht. Dieses Verhältnis ist als F-Nummer des Objektivs definiert. Daher wird die Anforderung an die F-Nummer bei Projektorbetrieb berücksichtigt, um die Beleuchtung auf der Projektionswand zu verbessern.

In einer Ausführungsform der Erfindung wird der Viewfinder in einer weiteren Form als Projektor betrieben. Um die Lichtverluste gering zu halten und eine gleichmäßige Beleuchtung des LCD-Bildschirmes zu gewährleisten, wird zwischen Lichtquelle und LCD-Bildschirm ein Rohr verwandt, so daß kein Licht verloren geht und durch die Reflektionen innerhalb des Rohres eine gleichmäßige Beleuchtung des LCD-Bildschirm gewährleistet wird. Dieses Rohr wird auch als Lichtleiter bezeichnet. Der Lichtleiter ist vorzugsweise eine verspiegelte Röhre mit Transparenz für Infrarot-Strahlungen. Insbesondere ist auch der Einsatz eines massiven Lichtleiters aus Kunststoff oder Glas möglich. Der Reflektor der Projektionslampe ist als Kühlkörper ausgebildet, so daß kein Ventilator benötigt wird. Das Backlight des LCD-Bildschirms bei Kamerabetrieb ist eine zweite Glühlampe, die innerhalb des Beleutungskanals angeordnet ist. Durch die Reflektionen der Lichstrahlen stört die Anordnung des Backlight nicht, und zur Helligkeitssteigerung bei Projektion wird das Backlight zuschaltbar ausgebildet. Ein in dem Viewfinder eingebauter Lautsprecher dient der Tonübermittlung. Vorteilhaft bei dieser Lösung ist, daß eine mechanische Umschaltung entfällt.

In einer weiteren Ausführungsform der Erfindung wird die Lichtleitung nicht benötigt, sonder das Backlight umklappbar gestaltet.

Aufgrund der geringen Transparanz wird ein Großteil der Lichtstrahlung direkt im LCD in Wärme umgesetzt. Da diese jedoch nur eine sehr geringe Wärmeleitung zur Umgebung besitzt, können zu hohe Übertemperaturen entstehen und das LCD zerstören. Zur Kühlung des LCD werden die aktiven LCD-Zellen nicht direkt einander berühren, sondern durch ein wärmeleitentes Medium (Rasen) getrennt. Dieser Rasen, da er ohnehin nicht lichtdurchlässig ist, wird als Wärmeleitung nach außen ausgenutzt. Über eine kleine Kühlfahne wird so der Wärmewiderstand zur Umgebung reduziert.

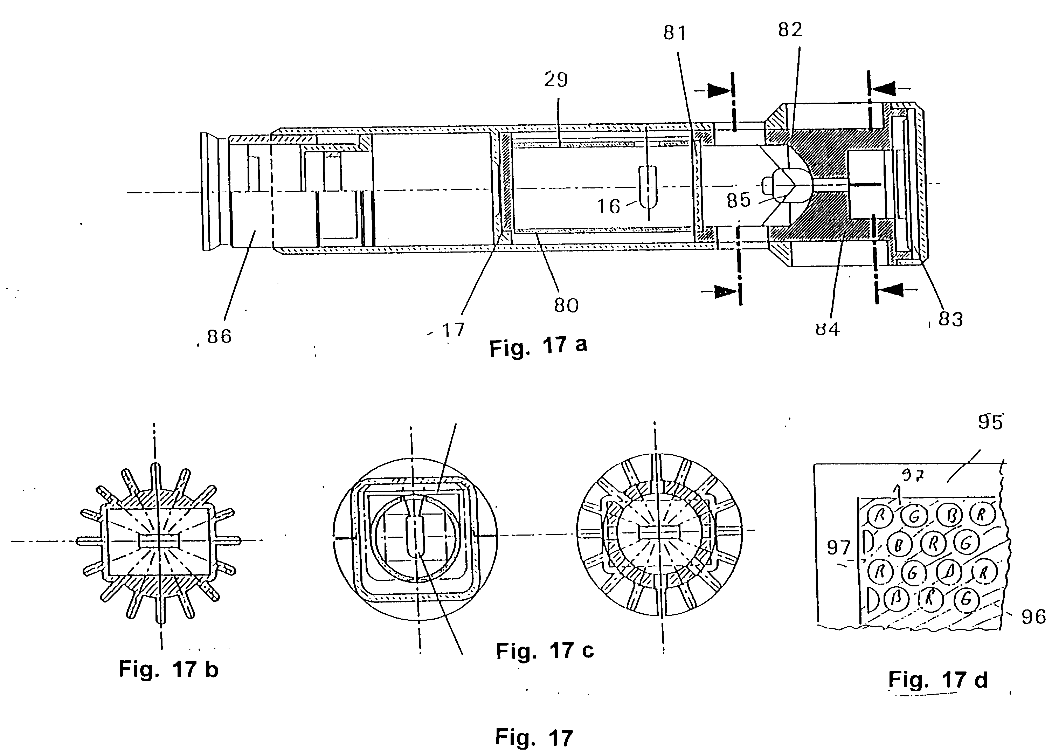

Fig. 17 stellt den Viewfinder als Projektor dar. Dargestellt sind die Projektionslampe 85, der Reflektor 82, der Reflektor Kühlkörper 84, der Infrarotfilter 81, das Backlight 16, das LCD 17, das Rohr 80, die Elektronik 29, der Lautsprecher 83 und das Linsensystem 86. Der Reflektor 82 besteht aus Alu und ist innen auf Hochglanz poliert. Der Reflektor-Kühlkörper 84 dient zur Kühlung des Systems. Der Infrarotfilter 81 hält die wärmeabgebenden Strahlen vom LCD 17 fern. Das Rohr 80 ist aus Kunststoff Hochglanz verchromt. Der Lautsprecher 83 dient zur Tonübertragung. Das Linsensystem 86 dient zur Fokussierung des Bildes. Die Fig. 17b zeigt den Viewfinder von links betrachtet, Fig. 17c zeigt den Viewfinder von rechts betrachtet. Fig. 17d stellt einen Ausschnitt des LCD 17 dar. Die LCD-Zellen R,G,B geben ihre Wärme über ein wärmeleitendes Medium 96 an den Kühlkörper 95 ab. Von den LCD-Zellen zum Kühlkörper fließt ein Wärmestrom 97.

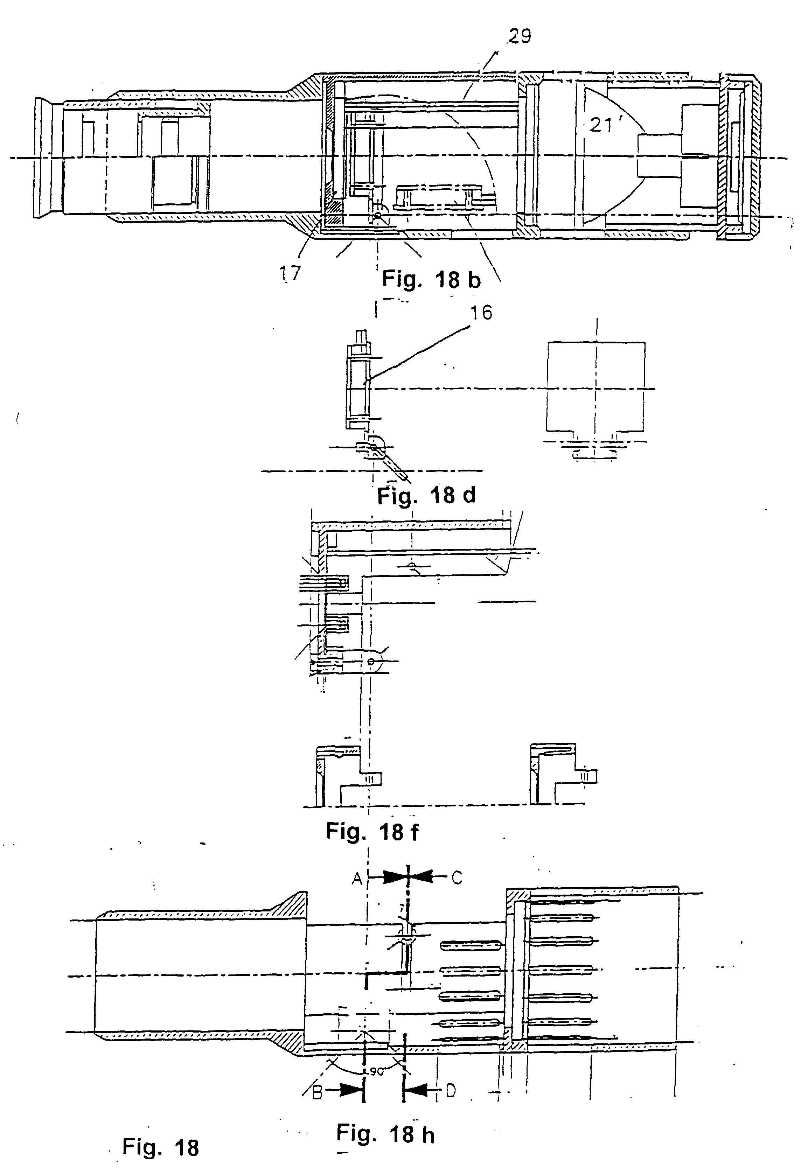

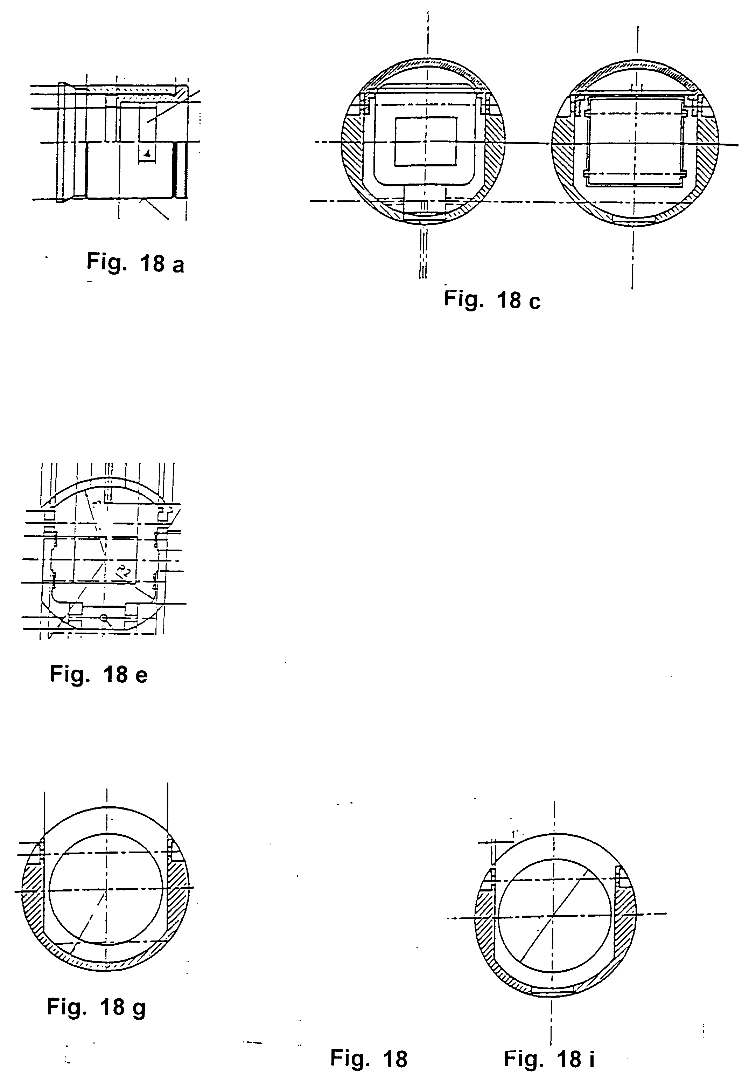

Fir. 18 zeigt eine weitere Ausführungsform des Viewfinders. Fig. 18b zeigt das LCD 17 mit der dazugehörenden Elektronik 29. Das LCD 17 wird vom Backlight 16 bei Kamerabetrieb und von der Halogenlampe bei Projektorbetrieb beleuchtet. In dieser Ausführungsform ist das Backlight 16 umklappbar, um nicht in den Lichtstrahlengang der Halogenlampe 21 bei Kamerabetrieb zu liegen. Fig. 18a zeigt die Ansicht des Viewfinders von links betrachtet, Fig. 18c zeigt die Ansicht des Viewfinders von rechts betrachtet. Fig. 18d zeigt das Backlight 16 einzeln dargestellt. Fig. 18f zeigt die Halterung für das Backlight einzeln dargestellt. Fig. 18e zeigt die Fig. 18f von links betrachtet. Fig. 18h zeigt das Kernstück des Viewfinders. Fig. 18g zeigt das Kernstück des Viewfinders von links betrachtet Fig. 18i zeigt das Kernstück des Viewfinders von rechts betrachtet.

Bei einer letzten Ausführungsform der Erfindung kann wahlweise der Kameraprojektor mit einem Signal der Recordereinheit oder von einem Tuner versorgt werden, um so ein Bild darzustellen. Der Tuner wird die Signale per Satellit oder über Antenne empfangen. Die Recordereinheit wird wahlweise mit 8 mm, VHS, MOD Abspiel- oder Aufnahmeeinheiten ausgestattet. Der Kameraprojektor ist im stationären Fall drehbar gelagert sowohl in vertikal als auch in horizontaler Richtung, so daß Bilder in jeglicher Stellung projiziert und aufgenommen werden können. Der Kameraprojektor und die Recordereinheit sind jeweils einzeln einsetzbar.

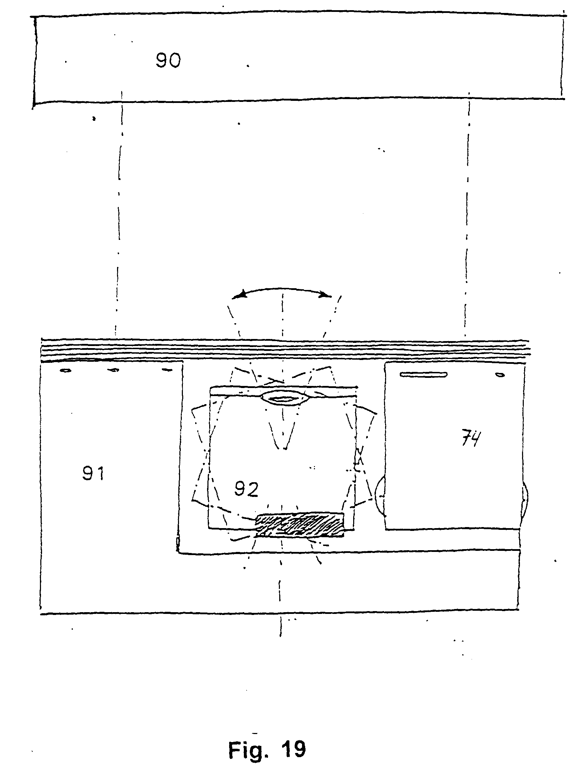

Fig. 19 stellt eine derartige Kombination dar. Der Tuner 91 enthält des weiteren einen Powersupply und eine Lichtquelle. Der Kameraprojektor 92 liefert ein Bild, welches auf dem Bildschirm 90 dargestellt wird. Die Recordereinheit 74, welche aus einem 8mm oder VHS-System besteht, gibt das Signal an den Kameraprojektor weiter. Der Kameraprojektor 92 ist sowohl in horinzontaler als auch in vertikaler Lage schwenkbar, und die Projitierung muß nicht auf einem Bildschirm-90 erfolgen, sondern ist auch auf jeglichen refektierenden Flächen möglich.

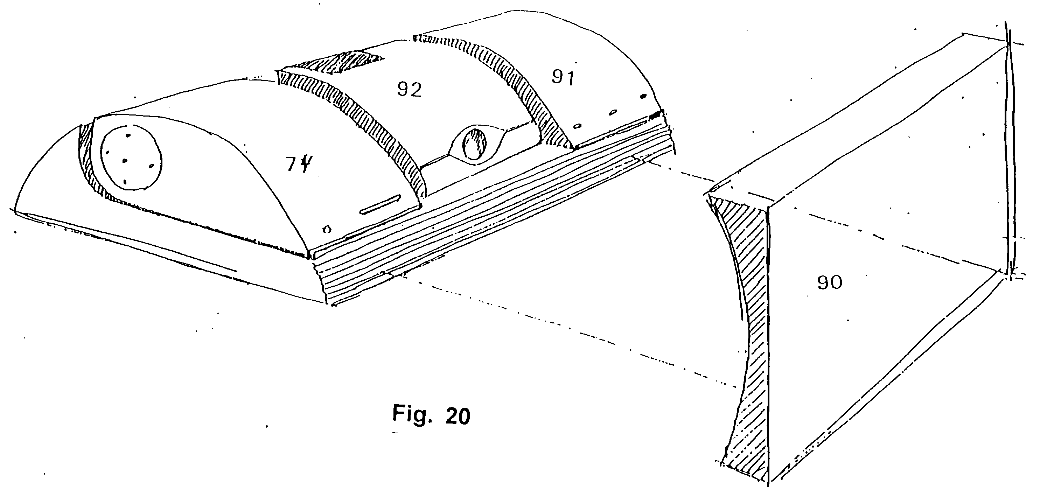

Fig. 20 stellt eine weitere Anordnung des Recorders 74, des Kameraprojektors 92, des Tuners 91 und des Bildschirmes 90 dar.

## Patentansprüche

1. Videokamera mit einem Objektiv (25), einem optoelektronischen Wandler (14) zur Erzeugung des Bildsignals, einem Sucher mit einem vom Videosignal gespeisten LCD-Bildschirm (17) und Signal-Eingangs- und Ausgangsklemmen (20), wobei die Kamera wahlweise als Projektor betreibbar ausgebildet ist, **dadurch gekennzeichnet, daß** die Signaleingangsklemme (20) an den LCD-Bildschirm (17) anschaltbar und an der Stelle des Sucher-Okulars eine Projektions-Lichtquelle (27) einschaltbar ist und, daß der zwischen dem Objektiv (25) und dem LCD-Bildschirm (17) angeordnete optoelektronische Wandler (14) bei Projektorbetrieb aus dem Strahlengang wegschwenkbar ist oder daß der LCD-Bildschirm (17) in den Strahlengang bei Projektorbetrieb geschwenkt wird, so daß das Objektiv (25), der LCD-Bildschirm (17) und die Projektions-Lichtquelle (27) in Projektorbetrieb in einer Achse angeordnet sind.

2. Kamera nach Anspruch 1, **dadurch gekennzeichnet**, daß die Signalklemmen (20) durch den Eingang und den Ausgang einer in der Kamera enthaltenen Recordereinheit (26) gebildet sind.

3. Kamera nach Anspruch 1, **dadurch gekennzeichnet,** daß der Wandler (14) zusammen mit einer Hintergrund-Lichtquelle (16) für den LCD-Bildschirm (17) aus dem Strahlengang wegschwenkbar ist.

4. Kamera nach Anspruch 1, **dadurch gekennzeichnet**, daß die Projektions-Lichtquelle (27) als getrennte, auf das Sucher-Okular der Kamera aufsetzbare Einheit ausgebildet ist.

5. Kamera nach Anspruch 1, **dadurch gekennzeichnet,** daß die für Kamerabetrieb vorgesehenen Einstellmittel (7, 8) für Zoom, Focus, Blende und dgl. auch bei Projektorbetrieb wirksam sind.

6. Kamera nach Anspruch 1, **dadurch gekennzeichnet**, daß der Kamera eine auf das Kameragehäuse aufsetzbare ProjektionsLeinwand zugeordnet ist.

7. Kamera nach Anspruch 1, **dadurch gekennzeichnet**, daß im Weg des Strahlengangs eine Linse (24) zur Formatanpassung der Bildabmessungen vorgesehen ist.

8. Kamera nach Anspruch 1, **dadurch gekennzeichnet**, daß zur Anpassung der Optik an die unterschiedlichen Formate des CCD-Wandlers (14) bei Kamerabetrieb und des LCD-Bildschirms (17) bei Projektorbetrieb eine Linse oder eine Linsengruppe des Objektivs in dem Objektivgehäuse in Axialrichtung zwischen zwei Stellungen verschiebbar angeordnet ist (Fig. 3, 4).

9. Kamera nach Anspruch 1, **dadurch gekennzeichnet**, daß für den Projektorbetrieb ein Optical Low Pass Filter (OLPF) zusammen mit dem CCD-Sensor (14) aus dem Lichtweg wegschwenkbar ist.

10. Kamera nach Anspruch 1, **dadurch gekennzeichnet**, daß ein CCD-Sensor (14) und ein LCD-Bildschirm (17) mit gleichen geometrischen Abmessungen verwendet werden.

11. Kamera nach Anspruch 1, **dadurch gekennzeichnet**, daß die unterschiedlichen Farbtemperaturen für Weiß am LCD-Bildschirm (17) bei Kamerabetrieb mit schwacher Beleuchtung und Projektorbetrieb mit nennenswert stärkerer Beleuchtung durch Änderung der Verstärkungsfaktoren für die RGB-Aussteuersignale für den LCD-Bildschirm (17) ausgeglichen werden.

12. Kamera nach Anspruch 1, **dadurch gekennzeichnet**, daß als Lichtquelle eine Doppelfadenglühbirne verwendet wird.

13. Kamera nach Anspruch 1, **dadurch gekennzeichnet**, daß für die Kühlung im Gehäuse der Kamera ein Ventilator (51) angeordnet ist.

14. Kamera nach Anspruch 1, **dadurch gekennzeichnet**, daß bei dem LCD-Bildschirm (17) die Seite, die mit der vollen Helligkeit zu betreiben ist, für den Projektorbetrieb und die Seite, die mit der geringeren Helligkeit zu betreiben ist, für den Kamerabetrieb verwendet ist.

15. Kamera nach Anspruch 1, **dadurch gekennzeichnet**, daß die Kamera auf ein Gehäuse (powerpack) aufsetzbar ist, in dem Lichtquelle, Ventilator, Netzteil zur Kamera, Ladeeinheit für Akku, Halterung für aufsetzbaren Akku und Tonteil integriert sind.

16. Kamera nach Anspruch 1, **dadurch gekennzeichnet**, daß die Einstellwerte für Helligkeit, Kontrast, Farbe durch software veränderbar sind.

17. Kamera nach Anspruch 1, **dadurch gekennzeichnet**, daß die unterschiedliche Formatanpassung mit Hilfe von zwei Relay-Linsen und zwei Irisblenden erfolgt.

18. Kamera nach Anspruch 1, **dadurch gekennzeichnet,** daß ein Lichtleitsystem (Rohr) das Licht der Projektionslampe ohne Verlust und gleichmäßig auf den LCD-Bildschirm leitet.

19. Kamera nach Anspruch 1, **dadurch gekennzeichnet,** daß ein Tuner (91), ein Recorder (74) und der Kameraprojektor (92) in Kombination mit einem Bildschirm (90) eine Einheit bilden.

## Claims

1. Video camera including an objective (25), an opto-electronic converter (14) for producing the image signal, a view finder including an LCD screen (17) fed by the video signal and signal input and output terminals (20) whereby the camera is constructed so as to be selectively operable as a projector, **characterised in that**, the signal input terminal (20) is connectible to the LCD screen (17) and a projector light source (27) can be inserted at the location of the eye piece of the view-finder, and that the opto-electronic converter (14) disposed between the objective (2) and the LCD screen (17) can be swung out of the beam path when operating as a projector or that the LCD screen (17) is swung into the beam path when operating as a projector so that the objective (25), the LCD screen (17) and the projector light source (27) are arranged along one axis in the projector mode.

2. Camera in accordance with Claim 1, **characterised in that**, the signal terminals (20) are formed by the input and the output of a recorder unit (26) contained in the camera.

3. Camera in accordance with Claim 1, **characterised in that**, the converter (14) can be swung out of the beam path together with a background light source (16) for the LCD screen (17).

4. Camera in accordance with Claim 1, **characterised in that**, the projector light source (27) is constructed as a separate unit that can be attached to the view-finder eye-piece of the camera.

5. Camera in accordance with Claim 1, **characterised in that**, the setting means (7, 8) for zoom, focus, aperture and the like which are provided for camera operation are also effective when operating as a projector.

6. Camera in accordance with Claim 1, **characterised in that**, the camera is associated with a projection screen that can be attached to the camera housing.

7. Camera in accordance with Claim 1, **characterised in that**, a lens (24) for matching the format of the image dimensions is provided in the path of the beam.

8. Camera in accordance with Claim 1, **characterised in that**, a lens or a lens group in the objective is arranged in the objective housing so as to be displaceable along the axis between two positions for the purposes of matching the optical system to the differing formats of the CCD converter (14) when operating as a camera and the LCD screen (17) when operating as a projector (Figs. 3, 4).

9. Camera in accordance with Claim 1, **characterised in that**, an optical low pass filter (OLPF) can be swung out of the light path together with the CCD sensor (14) for the projector mode.

10. Camera in accordance with Claim 1, **characterised in that**, a CCD sensor (14) and an LCD screen (17) having similar geometrical dimensions are used.

11. Camera in accordance with Claim 1, **characterised in that**, the differing colour temperatures for white on the LCD screen (17) when operating as a camera under weak lighting conditions and as a projector under appreciably more powerful lighting conditions are balanced out by altering the amplification factors for the RGB control signals for the LCD screen (17).

12. Camera in accordance with Claim 1, **characterised in that**, a double filament incandescent bulb is used as the light source.

13. Camera in accordance with Claim 1, **characterised in that**, a fan (51) is disposed in the housing of the camera for cooling purposes.

14. Camera in accordance with Claim 1, **characterised in that**, with regard to the LCD screen (17), the face that is to be operated at maximum brightness is used for the projector mode and the face that is to be operated at a lower brightness level is used for the camera mode.

15. Camera in accordance with Claim 1, **characterised in that**, the camera is attachable to a housing (powerpack) in which the light source, the fan, a mains unit for the camera, a charging unit for rechargeable batteries, a holder for insertable rechargeable batteries and a sound section are integrated.

16. Camera in accordance with Claim 1, **characterised in that**, the values to be set for brightness, contrast, colour are variable by means of software.

17. Camera in accordance with Claim 1, **characterised in that**, the matching of the differing formats is effected with the aid of two relay lenses and two iris diaphragms.

18. Camera in accordance with Claim 1, **characterised in that**, a light guide system (pipe) guides the light from the projection lamp to the LCD screen in a uniform and loss-free manner.

19. Camera in accordance with Claim 1, **characterised in that**, a tuner (91), a recorder (74) and the camera-projector (92) in combination with a screen (90) form a single entity.

## Revendications

1. Vidéocaméra comportant un objectif (25), un transformateur opto-électronique (14) pour produire un signal d'image, un viseur muni d'un écran-LCD (17) alimenté par le signal vidéo et des bornes d'entrée et de sortie (20) du signal, la caméra étant conçue pour fonctionner au choix en projecteur, caractérisée en ce que la borne d'entrée (20) du signal peut être connectée à l'écran-LCD (17) et une source de lumière (27) pour la projection peut être insérée à la place de l'oculaire du viseur et en ce que le transformateur opto-électronique (14) disposé entre l'objectif (25) et l'écran-LCD (17) peut être, dans le fonctionnement en projecteur, basculé en dehors du trajet lumineux, ou en ce que l'écran-LCD (17) peut être, dans le fonctionnement en projecteur, basculé dans le trajet lumineux, de sorte que l'objectif (25), l'écran-LCD (17) et la source de lumière (27) pour la projection soient, dans le fonctionnement en projecteur, disposés sur un même axe.

2. Caméra selon la revendication 1, caractérisée en ce que les bornes (20) pour le signal sont formées par l'entrée et la sortie d'une unité d'enregistrement (26) contenue dans la caméra.

3. Caméra selon la revendication 1, caractérisée en ce que le transformateur (14) peut être basculé en dehors du trajet lumineux en même temps qu'une source de lumière d'arrière- plan pour l'écran-LCD (17).

4. Caméra selon la revendication 1, caractérisée en ce que la source de lumière (27) pour la projection est conçue comme unité séparée pouvant être montée sur l'oculaire du viseur de la caméra.

5. Caméra selon la revendication 1, caractérisée en ce que les moyens de réglage (7,8) prévus dans le fonctionnement en caméra pour le zoom, le foyer, le diaphragme et analogues sont aussi actifs dans le fonctionnement en projecteur.

6. Caméra selon la revendication 1, caractérisée en ce qu'un écran de projection pouvant être installé sur le logement de la caméra est associé à la caméra.

7. Caméra selon la revendication 1, caractérisée en ce qu'une lentille (24) pour l'adaptation du format des dimensions de l'image est prévue sur le trajet lumineux.

8. Caméra selon la revendication 1, caractérisée en ce que, en vue de l'adaptation de l'optique aux différents formats du transformateur-CCD (14) dans le fonctionnement en caméra et de l'écran-LCD (17) dans le fonctionnement en projecteur, une lentille ou un groupe de lentilles de l'objectif situé dans le logement de l'objectif est disposé mobile en direction axiale entre d deux positions (Fig. 3, 4).

9. Caméra selon la revendication 1, caractérisée en ce que, pour le fonctionnement en projecteur, un filtre optique passe-bas (OLPF) peut être basculé en même temps que le détecteur-CCD (14) en dehors du trajet lumineux.

10. Caméra selon la revendication 1, caractérisée en ce qu'on utilise un détecteur-CCD (14) et un écran-LCD (17) présentant les mêmes dimensions géométriques.

11. Caméra selon la revendication 1, caractérisée en ce que les températures de couleur différentes pour le blanc sur l'écran-LCD (17) lors du fonctionnement en caméra avec un faible éclairement et lors du fonctionnement en projecteur avec un éclairement considérablement plus fort sont compensées par le changement des facteurs d'amplification des signaux de commande rouge/jaune/bleu pour l'écran-LCD (17).

12. Caméra selon la revendication 1, caractérisée en ce qu'on utilise comme source de lumière une lampe à incandescence à filament double.

13. Caméra selon la revendication 1, caractérisée en ce qu'un ventilateur (51) est installé pour le refroidissement du logement de la caméra.

14. Caméra selon la revendication 1, caractérisée en ce qu'on utilise, pour le fonctionnement en projecteur, le côté de l'écran-LCD (17) qui doit être activé avec la pleine luminosité, pour le fonctionnement en caméra le côté qui doit être activé avec la plus faible luminosité.

15. Caméra selon la revendication 1, caractérisée en ce que la caméra peut être montée sur un logement (bloc d'alimentation) dans lequel sont intégrés la source de lumière, le ventilateur, le réseau pour la caméra, l'unité de chargement pour l'accumulateur, le support pour l'accumulateur susceptible d'y être posé et la partie son.

16. Caméra selon la revendication 1, caractérisée en ce que les valeurs de réglage de la luminosité, du contraste et de la couleur sont modifiables par un software.

17. Caméra selon la revendication 1, caractérisée en ce que l'adaptation différente du format se fait avec l'aide de deux lentilles-relais et de deux diaphragmes-iris.

18. Caméra selon la revendication 1, caractérisée en ce qu'un système de guidage de lumière (tube) conduit la lumière de la lampe de projection à l'écran-LCD sans perte et avec une intensité uniforme.

19. Caméra selon la revendication 1, caractérisée en ce qu'un tuner (91), un enregistreur (74) et le projecteur-caméra (92) constituent en combinaison avec un écran (90) une unité.
